# EUROPÄISCHE PATENTSCHRIFT

(11) **EP 3 531 220 B1**
(45) Veröffentlichungstag und Bekanntmachung des Hinweises auf die Patenterteilung: **02.09.2020**
(21) Anmeldenummer: 18158857.5
(22) Anmeldetag: 27.02.2018
(51) Int. Cl.: G05B 19/05, H04L 29/08, H04L 12/24, H04L 29/06

(54) **FELDGERÄT UND VERFAHREN FÜR EIN AUTOMATISIERUNGSSYSTEM**
FIELD DEVICE AND METHOD FOR AN AUTOMATION SYSTEM
DISPOSITIF DE TERRAIN ET MÉTHODE POUR UN SYSTÈME D'AUTOMATISATION

(43) Veröffentlichungstag der Anmeldung: 28.08.2019
(73) Patentinhaber: Siemens Aktiengesellschaft, 80333 München (DE)
(72) Erfinder: Behringer, Klaus, 91338 Igensdorf (DE); Meier, Matthias, 92284 Poppenricht (DE)

(56) Entgegenhaltungen:
- EP-A1- 2 952 986
- DE-A1-102014 106 409
- US-A1- 2008 294 915
- US-A1- 2009 292 524
- US-B1- 6 170 007

## Beschreibung

Die Erfindung betrifft ein Feldgerät für ein Automatisierungssystem, das eine Recheneinheit, ein Bedienelement und eine Hardware-Schnittstelle umfasst. Die Recheneinheit ist dazu eingerichtet, Konfigurationsdaten zum Betrieb des Feldgeräts zu verwalten. Das Bedienelement ist ein durch einen Nutzer betätigbares Bedienelement, dessen Betätigung durch die Recheneinheit erfassbar ist. Die Hardware-Schnittstelle ermöglicht den Anschluss des Feldgeräts an ein Kommunikationssystem des Automatisierungssystems oder eine Konfigurationseinheit.

Ein Feldgerät der oben genannten Art ist eine technische Einrichtung im Bereich der Automatisierungstechnik. Das Feldgerät dient z.B. der Steuerung und/oder Überwachung und/oder dem Schutz einer Komponente in einem Produktionsprozess oder einem Arbeitsprozess. Über seine Hardware-Schnittstelle ist das Feldgerät entweder über einen Feldbus oder zunehmend auch über ein Echtzeit-Ethernet als Kommunikationssystem mit einem Steuerungs- und Leitsystem verbunden, in dem Daten ausgewertet werden, die zur Regelung, Steuerung und weiteren Verarbeitung des Feldgeräts bzw. der zugeordneten Komponente genutzt werden.

Da nicht alle Feldgeräte über ein ausreichend großes Display verfügen, erfolgt die Konfiguration über eine externe Konfigurationseinheit, welche über das Kommunikationssystem und die Hardware-Schnittstelle des Feldgeräts auf dieses zugreifen kann.

Ist die Hardware-Schnittstelle zum Anschluss des Feldgeräts an ein Feldbussystem ausgebildet, so verfügt diese über lediglich eingeschränkte, lokale Kommunikationsmöglichkeiten. Für eine Vor-Ort-Konfiguration des Feldgeräts muss durch einen Techniker eine Profinet-Verbindung (oder eine andere, von dem Feldbus unterstützte serielle Datenverbindung) aufgebaut werden, wofür spezielle Software-Tools erforderlich sind. Diese Software-Tools können sich dabei von Feldgerät zu Feldgerät unterscheiden, wodurch eine derartige Konfiguration unflexibel ist. Alternativ könnte eine speicherprogrammierbare Steuerung genutzt werden, womit jedoch ebenfalls ein nicht unerheblicher Aufwand verbunden ist.

Ist die Hardware-Schnittstelle demgegenüber zum Anschluss an ein Echtzeit-Ethernet-Kommunikationssystem vorgesehen, so ist eine erweiterte, da standardisierte Kommunikation mit dem Feldgerät möglich. Die Ausgestaltung der Hardware-Schnittstelle als Ethernet-Schnittstelle bringt jedoch ein erhöhtes Gefährdungspotential für Angriffe mit sich. Verschafft sich z.B. ein Angreifer Zugriff auf das Ethernet-basierte Kommunikationssystem des Automatisierungssystems, so kann er beim Fehlen weiterer Schutzmechanismen ohne Weiteres auf die Recheneinheit des Feldgeräts zugreifen und ggf. Konfigurationsdaten zum Betrieb des Feldgeräts löschen und/oder verändern, wodurch im schlimmsten Fall ein bestimmungsgemäßer Betrieb des Feldgeräts nicht mehr möglich ist.

Es ist daher Aufgabe der vorliegenden Erfindung, ein Feldgerät für ein Automatisierungssystem sowie ein Verfahren zum rechnergestützten Konfigurieren eines Feldgeräts für ein Automatisierungssystem anzugeben, welche eine einfache Vor-Ort-Konfiguration bei gleichzeitig hohem Sicherheitsstandard gegen unerlaubte Zugriffe bereitstellen.

Diese Aufgaben werden gelöst durch ein Feldgerät gemäß den Merkmalen des Patentanspruchs 1 und ein Verfahren gemäß den Merkmalen des Patentanspruchs 11. Vorteilhafte Ausgestaltungen ergeben sich aus den jeweiligen abhängigen Patentansprüchen.

Gemäß einem ersten Aspekt wird ein Feldgerät für ein Automatisierungssystem vorgeschlagen, das eine Recheneinheit, ein durch einen Nutzer betätigbares Bedienelement und eine Hardware-Schnittstelle umfasst. Die Recheneinheit ist dazu eingerichtet, Konfigurationsdaten zum Betrieb des Feldgeräts zu verwalten. Eine Betätigung des Bedienelements durch einen Nutzer ist durch die Recheneinheit erfassbar. Die Hardware-Schnittstelle dient zum Anschluss des Feldgeräts an ein Kommunikationssystem des Automatisierungssystems oder eine Konfigurationseinheit.

Die Recheneinheit ist dazu eingerichtet, das Feldgerät zur Änderung der Konfigurationsdaten in einen Konfigurationsmodus zu versetzen, wenn gleichzeitig ein erstes Signal von dem Bedienelement, das eine Betätigung durch einen Nutzer repräsentiert, und ein zweites Signal von der Hardware-Schnittstelle, das den Anschluss einer drahtgebundenen Verbindung repräsentiert, empfangen werden.

Ein derart ausgestaltetes Feldgerät ermöglicht die Integration eines speziellen Vor-Ort-Modus, der die Veränderung der Konfigurationsdaten zum Betrieb des Feldgeräts durch einen Nutzer nur am Ort des Feldgeräts ermöglicht. Die Änderung der Konfigurationsdaten wird durch die Recheneinheit dabei erst dann ermöglicht, wenn zwei Bedingungen zum gleichen Zeitpunkt erfüllt sind. Zum einen ist die Betätigung des Bedienelements durch einen Nutzer erforderlich, zum anderen ist die Signalisierung des Anschlusses einer drahtgebundenen Verbindung notwendig. Hierunter wird der Vorgang des Verbindens eines Kabels mit der Hardware-Schnittstelle verstanden. Beide Kriterien erfordern es, dass der Nutzer die beiden Handlungen am Ort des Feldgeräts durchführt, um es der Recheneinheit zu ermöglichen, diese als Kriterien zu überprüfen. Ein Zugriff bzw. eine Veränderung der Konfigurationsdaten ist somit nur möglich, wenn der Nutzer physikalischen Zugriff auf das Feldgerät hat. Unabhängig von der Ausgestaltung der Hardware-Schnittstelle und/oder des Kommunikationssystems und deren jeweiligen Schutzmechanismen kann dadurch eine hohe Sicherheit gegenüber Manipulation gewährleistet werden.

Dadurch wird es ermöglicht, das Feldgerät derart auszugestalten, dass die Recheneinheit einen Webserver ausführt, durch den die Konfigurationsdaten geändert werden können. Auf diese Weise kann zur Änderung der Konfigurationsdaten auf spezielle Software-Tools verzichtet werden, da der Web-Server einem Nutzer, der z.B. über eine Konfigurationseinheit in Gestalt eines Rechners oder Tablet-PCs über die Hardware-Schnittstelle mit der Recheneinheit des Feldgeräts kommunizieren kann, sämtliche zur Konfiguration erforderlichen Daten, Eingabemasken usw. bereitstellen kann. Das Feldgerät braucht damit zur Änderung der Konfigurationsdaten über kein proprietäres Display zu verfügen. Die Ausführung des Webservers kann initiiert werden, indem das Feldgerät über eine drahtgebundene Verbindung, die in die Hardware-Schnittstelle eingesteckt wird, mit der Konfigurationseinheit verbunden gleichzeitig das Bedienelement betätigen wird. Durch diese beiden Kriterien ist das Feldgerät dann in den Konfigurationsmodus versetzt, der das Ändern der Konfigurationsdaten gestattet.

Gemäß einer weiteren zweckmäßigen Ausgestaltung kann die Recheneinheit dazu eingerichtet sein, in dem Konfigurationsmodus eine Änderung, insbesondere ein Schreiben, der Konfigurationsdaten zuzulassen.

Um eine weitere Erhöhung der Sicherheit gegen einen unbefugten Zugriff auf die Konfigurationsdaten des Feldgeräts zu ermöglichen, kann zweckmäßigerweise vorgesehen sein, dass die Recheneinheit dazu eingerichtet ist, in dem Konfigurationsmodus vor der Zulassung einer Änderung ein Passwort abzufragen. Neben der physischen Präsenz des das Feldgerät konfigurierenden Nutzers, der gleichzeitig das Bedienelement des Feldgeräts betätigen und eine drahtgebundene Verbindung an die Hardware-Schnittstelle anschließen muss, muss als weiteres Kriterium durch den Nutzer also ein Passwort eingegeben werden, um eine Änderung an den Konfigurationsdaten des Feldgeräts mit Hilfe des von der Recheneinheit des Feldgeräts ausgeführten Webservers vornehmen zu können.

Gemäß einer weiteren zweckmäßigen Ausgestaltung kann vorgesehen sein, dass der Webserver über eine vorgegebene (feste) Adresse von der Konfigurationseinheit erreichbar ist. Um den Webserver zu erreichen, muss dem Nutzer die Adresse des Webservers somit bekannt sein. Alternativ kann der Webserver über eine dynamische Zuweisung einer Netzwerkkonfiguration mit Namensauflösung von der Konfigurationseinheit erreichbar sein. Dieses Prinzip ist als DHCP (Dynamic Host Configuration Protocol) bekannt. Ebenso könnte auch ein "Alias" implementiert werden, so dass der Nutzer im Webserver in der Adresszeile lediglich einen ihm bekannten Namen, z.B. "ABCdevice" angeben muss.

Das erste Signal kann eine vorgegebene Inhaltsinformation umfassen und/oder eine vorgegebene Zeitdauer anliegen. Eine vorgegebene Inhaltsinformation kann beispielsweise dann genutzt werden, wenn das Feldgerät über eine Mehrzahl an Bedienelementen verfügt, wobei die Betätigung eines jeweiligen Bedienelements eine unterschiedliche Information repräsentiert. Verfügt das Feldgerät über lediglich ein Bedienelement oder muss zur Aktivierung des Konfigurationsmodus ein bestimmtes Bedienelement betätigt werden, so kann dies z.B. durch das Betätigen für eine vorgegebene Mindestzeitdauer realisiert werden.

Das zweite Signal resultiert gemäß einer weiteren Ausgestaltung aus dem Anstecken der drahtgebundenen Verbindung an die Hardware-Schnittstelle. Hierbei können bekannte Mechanismen der Erkennung jeweiliger Steckkomponenten und die damit verbundenen Signalisierungsprotokolle genutzt werden.

Insbesondere handelt es sich bei der Hardware-Schnittstelle um eine Ethernet-Schnittstelle, die auf dem IP-Protokoll basiert.

Gemäß einer weiteren zweckmäßigen Ausgestaltung ist vorgesehen, dass die Recheneinheit dazu eingerichtet ist, den Konfigurationsmodus nach einer vorgegebenen Zeitspanne automatisch zu beenden. Hierdurch wird die Möglichkeit der Vornahme von Änderungen an den Konfigurationsdaten zeitlich begrenzt, wobei die Zeitspanne zweckmäßigerweise derart bemessen ist, dass sämtliche für eine Konfigurationsvornahme oder Konfigurationsänderung erforderlichen Tätigkeiten sicher abgeschlossen werden können. Durch die automatische Beendigung des Konfigurationsmodus nach einer vorgegebenen Zeitspanne ist es nicht erforderlich, dass sich der Nutzer explizit von dem Webserver abmeldet oder den Webserver schließt. Hiermit ist eine Erhöhung der Sicherheit gegen unbefugte Zugriffe auf das Feldgerät verbunden.

Gemäß einem zweiten Aspekt der vorliegenden Erfindung wird ein Verfahren zum rechnergestützten Konfigurieren eines Feldgeräts vorgeschlagen, wobei das Feldgerät gemäß der oben beschriebenen und nachfolgend beschriebenen Weise ausgebildet ist. Das Verfahren umfasst den Schritt des Empfangens eines ersten Signals von dem Betätigungselement, das eine Betätigung durch einen Nutzer repräsentiert. Das Verfahren umfasst den weiteren Schritt des Empfangens eines zweiten Signals von der Hardware-Schnittstelle, das den Anschluss einer drahtgebundenen Verbindung repräsentiert. Das Verfahren umfasst den Schritt des Überführens des Feldgeräts in einen Konfigurationsmodus, in dem die Konfigurationsdaten des Feldgeräts durch eine Konfigurationseinheit veränderbar sind, wenn das erste und das zweite Signal gleichzeitig empfangen werden.

Das beschriebene Verfahren weist die gleichen Vorteile auf, wie diese vorstehend in Verbindung mit dem erfindungsgemäßen Feldgerät beschrieben wurden.

Gemäß einer zweckmäßigen Ausgestaltung des Verfahrens führt die Recheneinheit in dem Konfigurationsmodus einen Webserver aus. Der Webserver wird zweckmäßigerweise automatisch gestartet, wenn die Recheneinheit feststellt, dass das erste und das zweite Signal gleichzeitig empfangen wurden.

In dem Konfigurationsmodus lässt die Recheneinheit eine Änderung, insbesondere ein Schreiben, der Konfigurationsdaten zu. Das Schreiben bzw. Verändern der Konfigurationsdaten erfolgt zweckmäßigerweise mit Hilfe einer externen Konfigurationseinheit, die über die drahtgebundene Verbindung und die Hardware-Schnittstelle mit dem Feldgerät verbunden ist. Bei der Konfigurationseinheit kann es sich um einen Rechner, wie z.B. einen Laptop, einen Tablet-PC und dergleichen handeln.

Der Webserver wird zweckmäßigerweise über eine vorgegebene (feste) Adresse von der Konfigurationseinheit erreicht. Die Adresse des Webservers muss dabei dem Nutzer bekannt sein. Alternativ kann der Webserver von der Konfigurationseinheit über eine dynamische Zuweisung einer Netzwerkkonfiguration und Namensauflösung erreicht werden. Damit kann über das bekannte Verfahren DHCP eine Netzwerkadresse automatisch zugewiesen werden. Ebenso kann ein "Alias" implementiert werden, so dass der die Konfiguration vornehmende Nutzer im Adressfeld des Webservers lediglich einen ihm bekannten Alias-Namen, z.B. "ABCdevice" eingeben muss.

Gemäß einer weiteren Ausgestaltung wird durch die Recheneinheit bestimmt, ob das erste Signal eine vorgegebene Inhaltsinformation umfasst oder für eine vorgegebene Zeitdauer anliegt. Nur beim Vorliegen eines jeweiligen Kriteriums repräsentiert dann das erste Signal eine Betätigung durch einen Nutzer.

Gemäß einer weiteren zweckmäßigen Ausgestaltung wird durch die Recheneinheit bestimmt, ob das zweite Signal aus dem Anstecken der drahtgebundenen Verbindung an die Hardware-Schnittstelle resultiert. Nur in diesem Fall repräsentiert das zweite Signal den Anschluss einer drahtgebundenen Verbindung und führt damit zu einem Erfüllen des Kriteriums.

Eine weitere Ausgestaltung sieht vor, dass die Recheneinheit den Konfigurationsmodus nach einer vorgegebenen Zeitspanne automatisch beendet. Hierdurch wird sichergestellt, dass bei einer zeitlich fortdauernden Verbindung der Konfigurationseinheit mit dem Feldgerät keine spätere Änderung an den Konfigurationsdaten erfolgen kann, welche womöglich nicht von einem autorisierten Nutzer stammt.

Es wird ferner ein Computerprogramm mit Softwarecodeabschnitten zur Durchführung der oben genannten Schritte vorgeschlagen.

Darüber hinaus wird ein Computerprogrammprodukt vorgeschlagen, das direkt in den internen Speicher einer digitalen Recheneinheit geladen werden kann und Softwarecodeabschnitte umfasst, mit denen das hierin beschriebene Verfahren ausgeführt werden kann, wenn das Produkt auf der Recheneinheit läuft. Das Computerprogrammprodukt kann in Gestalt einer CD-ROM, einer DVD, einem USB-Speicherstick oder eines über ein drahtgebundenes oder drahtloses Netzwerk ladbares Signal vorliegen.

Weitere Merkmale der Erfindung werden nachfolgend durch die Beschreibung eines Ausführungsbeispiels in den Zeichnungen erläutert. Es zeigen:
- Fig. 1: eine schematische Darstellung eines erfindungsgemäßen Feldgeräts für ein Automatisierungssystem, das zur Konfiguration mit einer Konfigurationseinheit zum Austausch von Daten gekoppelt ist; und
- Fig. 2: einen Ablaufplan, der die prinzipiellen Schritte des erfindungsgemäßen Verfahrens illustriert.

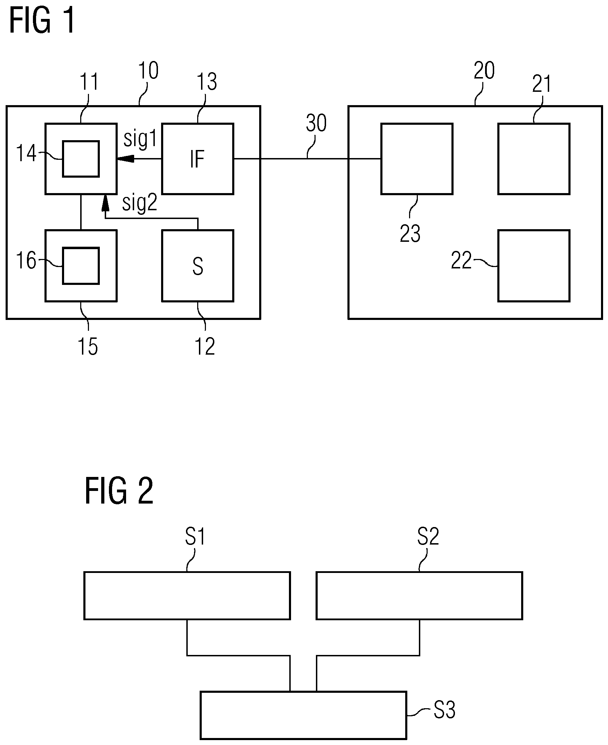

Fig. 1 zeigt ein Feldgerät 10 für ein nicht näher dargestelltes Automatisierungssystem. Das Feldgerät 10 umfasst eine Recheneinheit 11, ein Bedienelement 12, eine Hardware-Schnittstelle 13 sowie einen Speicher 15. In dem Speicher 15 sind Konfigurationsdaten 16 gespeichert, welche zum Betrieb des Feldgeräts 10 durch die Recheneinheit 11 verarbeitet werden. Das Feldgerät 10 dient in einer dem Fachmann bekannten Weise zum Steuern und/oder Überwachen einer nicht dargestellten Komponente des Automatisierungssystems.

Das Bedienelement 12 kann beispielsweise ein Taster, ein Schalter oder ein anderes Element sein, welches für den bestimmungsgemäßen Betrieb des Feldgeräts dient. Beispielsweise kann das Bedienelement ein Resettaster sein, um das Feldgerät auf Wunsch eines Nutzers in einen Ausgangszustand versetzen zu können.

Das Feldgerät 10 ist über die Hardware-Schnittstelle 13 an ein nicht dargestelltes Kommunikationssystem des Automatisierungssystems angeschlossen. Das Kommunikationssystem kann beispielsweise als ein Echtzeit-Ethernet ausgebildet sein. Über das Kommunikationssystem kann das Feldgerät 10 in einer dem Fachmann bekannten Weise Daten (z.B. Messdaten, Steuerdaten und dergleichen) mit einem Steuerungs- und Leitsystem oder anderen Feldgeräten austauschen.

Das Ändern der in dem Speicher 15 enthaltenen Konfigurationsdaten 16 erfolgt mit Hilfe eines Webservers 14, welcher durch die Recheneinheit 11 ausgeführt werden kann. Um den Webserver 14 starten und über diesen Konfigurationsdaten 16 auslesen oder schreiben (allgemein: ändern) zu können, müssen zwei Bedingungen vorliegen, die die physische Nähe eines Nutzers zu dem Feldgerät 10 erfordern. Zum einen ist das Bedienelement 12 durch den Nutzer in vorgegebener Weise zu betätigen, zum anderen ist eine drahtgebundene Verbindung, z.B. ein Netzwerk-Kabel, mit der Hardware-Schnittstelle 13 zu verbinden. Die Betätigung des Bedienelements 12 in der vorgegebenen Weise (z.B. mehr als 2 Sekunden) führt zu einem ersten Signal sig1, welches von der Recheneinheit 11 empfangen wird. Die Verbindung eines Netzwerk-Kabels mit der Hardware-Schnittstelle 13 führt zu einem zweiten Signal sig2, welches ebenfalls von der Schnittstelle 11 empfangen wird. Werden das erste und das zweite Signal sig1 und sig2 gleichzeitig von der Recheneinheit 11 empfangen, so sind die Bedingungen für den Start und die Ausführung des Webservers 14 erfüllt.

Der Webserver 14 kann beispielsweise durch eine Konfigurationseinheit 20 in Gestalt eines Rechners, z.B. Laptop oder Tablet-PC, genutzt werden. Die Konfigurationseinheit 20 verfügt über ein Display 21, ein Eingabemittel 22 (z.B. Tastatur und/oder berührungsempfindliches Display und/oder Zeigegerät) sowie eine Schnittstelle 23, in die das andere Ende des Netzwerk-Kabels 30, welches die drahtgebundene Verbindung darstellt, eingesteckt ist.

Der Zugriff auf den Webserver 14 durch die Konfigurationseinheit 20 erfolgt entweder über eine feste Adresse, die von einem Nutzer der Konfigurationseinheit 20 über das Eingabemittel eingegeben wird. Alternativ kann eine dynamische Zuweisung einer Adresse über DHCP erfolgen, sobald die physikalische Verbindung mit Hilfe der drahtgebundenen Verbindung 30 zwischen der Hardware-Schnittstelle 13 und der Schnittstelle 23 hergestellt ist. Der Zugriff auf den Webserver wird jedoch, wie oben beschrieben, nur dann ermöglicht, wenn gleichzeitig die Betätigung des Bedienelements 12 durch den Nutzer durch die Recheneinheit 11 festgestellt werden konnte. Hierzu kann es, wie beschrieben, beispielsweise erforderlich sein, dass das Bedienelement 12 für eine vorgegebene Zeitdauer, z.B. mehrere Sekunden, gedrückt wird.

Sobald der Webserver aktiviert ist, kann eine Änderung der Konfigurationsdaten 16 mittels der Konfigurationseinheit 20 erfolgen. Die Konfigurationsdaten, die aktuell in dem Speicher 15 hinterlegt sind, können dazu zunächst auf dem Display 21 visualisiert und mit Hilfe der Eingabeeinheit 22 geändert, überschrieben oder gelöscht werden.

Um die Sicherheit zu erhöhen, kann es darüber hinaus vorgesehen sein, nach dem Starten des Webservers über die Konfigurationseinheit von dem Nutzer ein Passwort abzufragen.

Es ist weiterhin zweckmäßig, wenn der Zugriff auf den Webserver 14 zeitlich beschränkt ist. So kann der Webserver 14 durch die Recheneinheit 11 automatisch gestoppt werden, wenn z.B. nach dem Starten des Webservers eine vorgegebene Zeitspanne, z.B. 10 Minuten, vergangen ist. Dies erschwert es potentiellen Angreifern zusätzlich, die Konfigurationsdaten 16 in dem Feldgerät 10 zu manipulieren.

Um die Veränderung der Konfigurationsdaten 16, wie beschrieben, durchführen zu können, ist gemäß der obigen Beschreibung vorgesehen, die im Betrieb vorgesehene Verbindung der Hardware-Schnittstelle 13 zu dem Kommunikationssystem aufzutrennen und stattdessen eine direkte Verbindung mit einer drahtgebundenen Verbindung 30 (Netzwerk-Kabel) zu der Konfigurationseinheit 20 vorzunehmen. Nach Abschluss der Konfiguration wird die drahtgebundene Verbindung 30 von der Hardware-Schnittstelle 13 getrennt und wiederum eine Verbindung zu dem Kommunikationssystem vorgenommen.

Anstelle eine direkte Verbindung zwischen dem Feldgerät 10 und der Konfigurationseinheit 20 vorzunehmen, wie dies in Fig. 1 dargestellt ist, können die beiden Komponenten auch unter Zwischenschaltung eines Routers oder eines anderen technischen Vermittlungsgeräts miteinander verbunden sein.

Fig. 2 zeigt den prinzipiellen Ablauf des Verfahrens des rechnergestützten Konfigurierens des Feldgeräts 10. In einem ersten Schritt S1 erfolgt ein Empfangen eines ersten Signals sig1 von dem Bedienelement 12, das eine Betätigung durch einen Nutzer repräsentiert. In einem Schritt S2 erfolgt ein Empfangen eines zweiten Signals sig2 von der Hardware-Schnittstelle 13, das den Anschluss einer drahtgebundenen Verbindung repräsentiert. Wird in einem Schritt S3 festgestellt, dass das erste und das zweite Signal sig1, sig2 gleichzeitig von der Recheneinheit 11 empfangen werden, wird das Feldgerät 10 durch die Recheneinheit 11 in einen Konfigurationsmodus überführt, in dem die Konfigurationsdaten 16 des Feldgeräts 10 durch eine an die Hardware-Schnittstelle 13 angeschlossene Konfigurationseinheit 20 veränderbar sind.

## Patentansprüche

1. Feldgerät für ein Automatisierungssystem, umfassend:
- eine Recheneinheit (11), die dazu eingerichtet ist, Konfigurationsdaten zum Betrieb des Feldgeräts (10) zu verwalten;
- ein durch einen Nutzer betätigbares Bedienelement (12), dessen Betätigung durch die Recheneinheit (11) erfassbar ist;
- eine Hardware-Schnittstelle (13) zum Anschluss des Feldgeräts (10) an ein Kommunikationssystem des Automatisierungssystems oder eine Konfigurationseinheit (20);
**dadurch gekennzeichnet, dass**
die Recheneinheit (11) ferner dazu eingerichtet ist, das Feldgerät (10) zur Änderung der Konfigurationsdaten in einen Konfigurationsmodus zu versetzen, wenn gleichzeitig ein erstes Signal (sig1) von dem Bedienelement (12), das eine Betätigung durch einen Nutzer repräsentiert, und ein zweites Signal (sig2) von der Hardware-Schnittstelle (13), das den Anschluss einer drahtgebundenen Verbindung repräsentiert, empfangen werden.

2. Feldgerät nach Anspruch 1, **dadurch gekennzeichnet, dass** die Recheneinheit (11) dazu eingerichtet ist, in dem Konfigurationsmodus einen Webserver (14) auszuführen.

3. Feldgerät nach Anspruch 1 oder 2, **dadurch gekennzeichnet, dass** die Recheneinheit (11) dazu eingerichtet ist, in dem Konfigurationsmodus eine Änderung, insbesondere ein Schreiben, der Konfigurationsdaten zuzulassen.

4. Feldgerät nach Anspruch 3, **dadurch gekennzeichnet, dass** die Recheneinheit (11) dazu eingerichtet ist, in dem Konfigurationsmodus vor der Zulassung einer Änderung ein Passwort abzufragen.

5. Feldgerät nach einem der Ansprüche 2 bis 4, **dadurch gekennzeichnet, dass** der Webserver (14) über eine vorgegebene Adresse von der Konfigurationseinheit (20) erreichbar ist.

6. Feldgerät nach einem der Ansprüche 2 bis 4, **dadurch gekennzeichnet, dass** der Webserver (14) über eine dynamische Zuweisung einer Netzwerkkonfiguration und Namensauflösung von der Konfigurationseinheit (20) erreichbar ist.

7. Feldgerät nach einem der vorhergehenden Ansprüche, **dadurch gekennzeichnet, dass** das erste Signal (sig1) eine vorgegebene Inhaltsinformation umfasst und/oder für eine vorgegebene Zeitdauer anliegt.

8. Feldgerät nach einem der vorhergehenden Ansprüche, **dadurch gekennzeichnet, dass** das zweite Signal (sig2) aus dem Anstecken der drahtgebundenen Verbindung an die Hardware-Schnittstelle (13) resultiert.

9. Feldgerät nach einem der vorhergehenden Ansprüche, **dadurch gekennzeichnet, dass** die Recheneinheit (11) dazu eingerichtet ist, den Konfigurationsmodus nach einer vorgegebenen Zeitspanne automatisch zu beenden.

10. Feldgerät nach einem der vorhergehenden Ansprüche, **dadurch gekennzeichnet, dass** die Hardware-Schnittstelle (13) eine Ethernet-Schnittstelle ist, die auf dem IP-Protokoll basiert.

11. Verfahren zum rechnergestützten Konfigurieren eines Feldgeräts, wobei das Feldgerät (10) gemäß einem der vorhergehenden Ansprüche ausgebildet ist, mit den Schritten:
- Empfangen (S1) eines ersten Signals (sig1) von dem Bedienelement (12), das eine Betätigung durch einen Nutzer repräsentiert;
- Empfangen (S2) eines zweiten Signals (sig2) von der Hardware-Schnittstelle (13), das den Anschluss einer drahtgebundenen Verbindung repräsentiert;
- Überführen des Feldgeräts (10) in einen Konfigurationsmodus, in dem die Konfigurationsdaten des Feldgeräts durch eine Konfigurationseinheit (20) veränderbar sind, wenn das erste und das zweite Signal (sig1, sig2) gleichzeitig empfangen werden.

12. Verfahren nach Anspruch 11, bei dem die Recheneinheit (11) in dem Konfigurationsmodus einen Webserver (14) ausführt.

13. Verfahren nach Anspruch 11 oder 12, bei dem die Recheneinheit (11) in dem Konfigurationsmodus eine Änderung, insbesondere ein Schreiben, der Konfigurationsdaten zulässt.

14. Verfahren nach einem der Ansprüche 12 bis 13, bei dem der Webserver (14) über eine vorgegebene Adresse von der Konfigurationseinheit (20) erreicht wird.

15. Verfahren nach einem der Ansprüche 12 bis 13, bei dem der Webserver (14) über eine dynamische Zuweisung einer Netzwerckonfiguration und Namensauflösung von der Konfigurationseinheit (20) erreicht wird.

16. Verfahren nach einem der Ansprüche 11 bis 15, bei dem durch die Recheneinheit (11) bestimmt wird, ob das erste Signal (sig1) eine vorgegebene Inhaltsinformation umfasst oder für eine vorgegebene Zeitdauer anliegt.

17. Verfahren nach einem der Ansprüche 11 bis 16, bei dem durch die Recheneinheit (11) bestimmt wird, ob das zweite Signal (sig2) aus dem Anstecken der drahtgebundenen Verbindung an die Hardware-Schnittstelle (13) resultiert.

18. Verfahren nach einem der Ansprüche 11 bis 17, bei dem die Recheneinheit (11) den Konfigurationsmodus nach einer vorgegebenen Zeitspanne automatisch beendet.

19. Computerprogramm mit Softwarecodeabschnitten zur Durchführung der Schritte gemäß einem der Ansprüche 11 bis 18.

20. Computerprogrammprodukt, das direkt in den internen Speicher einer digitalen Recheneinheit geladen werden kann und Softwarecodeabschnitte umfasst, mit denen die Schritte gemäß einem der Ansprüche 11 bis 18 ausgeführt werden, wenn das Produkt auf der Recheneinheit läuft.

## Claims

1. Field device for an automation system, comprising:
- an arithmetic unit (11) that is designed to manage configuration data for operating the field device (10);
- an operating element (12) that can be actuated by a user and whose actuation can be detected by the arithmetic unit (11) ;
- a hardware interface (13) to enable the field device (10) to be connected to a communication system of the automation system or a configuration unit (20);
**characterised in that**
the arithmetic unit (11) is further designed to put the field device (10) into a configuration mode to change the configuration data, if simultaneously a first signal (sig1) from the operating element (12), that represents an actuation by a user, and a second signal (sig2) from the hardware interface (13), that represents the terminal connection of a wired connection, are received.

2. Field device according to claim 1, **characterised in that** the arithmetic unit (11) is designed to execute a web server (14) in the configuration mode.

3. Field device according to claim 1 or 2, **characterised in that** the arithmetic unit (11) is designed to permit the configuration data to be changed, in particular written, in the configuration mode.

4. Field device according to claim 3, **characterised in that** the arithmetic unit (11) is designed to request a password before a change is permitted in the configuration mode.

5. Field device according to one of claims 2 to 4, **characterised in that** the web server (14) can be accessed by the configuration unit (20) via a defined address.

6. Field device according to one of claims 2 to 4, **characterised in that** the web server (14) can be accessed by the configuration unit (20) by way of a dynamic assignment of a network configuration and name resolution.

7. Field device according to one of the preceding claims, **characterised in that** the first signal (sig1) comprises defined content information and/or is present for a defined period of time.

8. Field device according to one of the preceding claims, **characterised in that** the second signal (sig2) results from the wired connection being plugged into the hardware interface (13) .

9. Field device according to one of the preceding claims, **characterised in that** the arithmetic unit (11) is designed to terminate the configuration mode automatically after a defined period of time.

10. Field device according to one of the preceding claims, **characterised in that** the hardware interface (13) is an Ethernet interface based on the IP protocol.

11. Method for the computer-aided configuration of a field device, wherein the field device (10) is embodied in accordance with one of the preceding claims, containing the steps:
- Receipt (S1) of a first signal (sig1) from the operating element (12), which represents an actuation by a user;
- Receipt (S2) of a second signal (sig2) from the hardware interface (13), which represents the terminal connection of a wired connection;
- Placing the field device (10) in a configuration mode, in which the configuration data of the field device can be changed by a configuration unit (20), if the first and the second signal (sig1, sig2) are received simultaneously.

12. Method according to claim 11, wherein the arithmetic unit (11) executes a web server (14) in the configuration mode.

13. Method according to claim 11 or 12, wherein the arithmetic unit (11) permits the configuration data to be changed, in particular written, in the configuration mode.

14. Method according to one of claims 12 to 13, wherein the web server (14) is accessed by the configuration unit (20) via a defined address.

15. Method according to one of claims 12 to 13, wherein the web server (14) is accessed by the configuration unit (20) via a dynamic assignment of a network configuration and name resolution.

16. Method according to one of claims 11 to 15, wherein the arithmetic unit (11) determines whether the first signal (sig1) comprises defined content information or is present for a defined period of time.

17. Method according to one of claims 11 to 16, wherein the arithmetic unit (11) determines whether the second signal (sig2) results for the wired connection being plugged into the hardware interface (13).

18. Method according to one of claims 11 to 17, wherein the arithmetic unit (11) automatically terminates the configuration mode after a defined period of time.

19. Computer program with software code sections for the performance of the steps according to one of claims 11 to 18.

20. Computer program product which can be loaded directly into the internal memory of a digital arithmetic unit and which comprises software code sections with which the steps according to one of claims 11 to 18 can be executed if the product is running on the arithmetic unit.

## Revendications

1. Appareil de terrain pour un système d'automatisation, comprenant :
- une unité de traitement (11) qui est conçue pour administrer des données de configuration destinées à l'exploitation de l'appareil de terrain (10) ;
- un élément de commande (12) actionnable par le biais d'un utilisateur, dont l'actionnement peut être détecté par le biais de l'unité de traitement (11) ;
- une interface matérielle (13) destinée au branchement de l'appareil de terrain (10) à un système de communication du système d'automatisation ou à une unité de configuration (20) ;
**caractérisé en ce que**
l'unité de traitement (11) est en outre conçue pour mettre l'appareil de terrain (10) en mode de configuration pour la modification des données de configuration lorsque simultanément un premier signal (sig1) qui représente un actionnement par le biais d'un utilisateur est reçu par l'élément de commande (12) et un second signal (sig2) qui représente le branchement d'une connexion avec fil est reçu par l'interface matérielle (13).

2. Appareil de terrain selon la revendication 1, **caractérisé en ce que** l'unité de traitement (11) est conçue pour exécuter un serveur web (14) dans le mode de configuration.

3. Appareil de terrain selon la revendication 1 ou 2, **caractérisé en ce que** l'unité de traitement (11) est conçue pour autoriser dans le mode de configuration une modification, en particulier une écriture, des données de configuration.

4. Appareil de terrain selon la revendication 3, **caractérisé en ce que** l'unité de traitement (11) est conçue pour demander un mot de passe dans le mode de configuration avant l'autorisation d'une modification.

5. Appareil de terrain selon l'une des revendications 2 à 4, **caractérisé en ce que** le serveur web (14) peut être atteint par l'unité de configuration (20) par l'intermédiaire d'une adresse prédéfinie.

6. Appareil de terrain selon l'une des revendications 2 à 4, **caractérisé en ce que** le serveur web (14) peut être atteint par l'unité de configuration (20) par l'intermédiaire d'une attribution dynamique d'une configuration de réseau et d'une résolution de nom.

7. Appareil de terrain selon l'une des revendications précédentes, **caractérisé en ce que** le premier signal (sig1) comprend une information de contenu prédéfinie et/ou s'applique sur une durée prédéfinie.

8. Appareil de terrain selon l'une des revendications précédentes, **caractérisé en ce que** le second signal (sig2) résulte de la fixation de la connexion avec fil à l'interface matérielle (13).

9. Appareil de terrain selon l'une des revendications précédentes, **caractérisé en ce que** l'unité de traitement (11) est conçue pour mettre fin automatiquement au mode de configuration après un intervalle de temps prédéfini.

10. Appareil de terrain selon l'une des revendications précédentes, **caractérisé en ce que** l'interface matérielle (13) est une interface Ethernet qui est basée sur le protocole IP.

11. Procédé destiné à la configuration informatisée d'un appareil de terrain, dans lequel l'appareil de terrain (10) est réalisé selon l'une des revendications précédentes, avec les étapes suivantes :
- réception (S1) d'un premier signal (sig1) qui représente un actionnement par le biais d'un utilisateur par l'élément de commande (12) ;
- réception (S2) d'un second signal (sig2) qui représente le branchement d'une connexion avec fil par l'interface matérielle (13) ;
- passage de l'appareil de terrain (10) en mode de configuration dans lequel les données de configuration de l'appareil de terrain peuvent être modifiées par le biais d'une unité de configuration (20) lorsque le premier et le second signal (sig1 sig2) sont reçus simultanément.

12. Procédé selon la revendication 11, dans lequel l'unité de traitement (11) exécute un serveur web (14) dans le mode de configuration.

13. Procédé selon la revendication 11 ou 12, dans lequel l'unité de traitement (11) autorise dans le mode de configuration une modification, en particulier une écriture, des données de configuration.

14. Procédé selon l'une des revendications 12 à 13, dans lequel le serveur web (14) est atteint par l'unité de configuration (20) par l'intermédiaire d'une adresse prédéfinie.

15. Procédé selon l'une des revendications 12 à 13, dans lequel le serveur web (14) est atteint par l'unité de configuration (20) par l'intermédiaire d'une attribution dynamique d'une configuration de réseau et d'une résolution de nom.

16. Procédé selon l'une des revendications 11 à 15, dans lequel il est déterminé par le biais de l'unité de traitement (11) si le premier signal (sig1) comprend une information de contenu prédéfinie ou s'applique sur une durée prédéfinie.

17. Procédé selon l'une des revendications 11 à 16, dans lequel il est déterminé par le biais de l'unité de traitement (11) si le second signal (sig2) résulte de la fixation de la connexion avec fil à l'interface matérielle (13).

18. Procédé selon l'une des revendications 11 à 17, dans lequel l'unité de traitement (11) met fin automatiquement au mode de configuration après un intervalle de temps prédéfini.

19. Programme informatique avec des parties de code de logiciel destinées à la mise en œuvre des étapes selon l'une des revendications 11 à 18.

20. Produit de programme informatique qui peut être chargé directement dans la mémoire interne d'une unité de traitement numérique et comprend des parties de code de logiciel avec lesquelles les étapes selon l'une des revendications 11 à 18 sont exécutées lorsque le produit marche sur l'unité de traitement.
